# EUROPÄISCHE PATENTSCHRIFT

(11) **EP 1 319 331 B1**
(45) Veröffentlichungstag und Bekanntmachung des Hinweises auf die Patenterteilung: **28.11.2007**
(21) Anmeldenummer: 02102671.1
(22) Anmeldetag: 02.12.2002
(51) Int. Cl.: A01F 29/20

(54) **Befestigungsanordnung zur Befestigung eines Schlägels an einem Rotor eines Strohhäckslers**
Fastening mechanism to fasten a knife to the rotor of a straw chopper
Dispositif pour monter un fléau au roteur d'un hache-paille

(30) Priorität: 15.12.2001 DE 10161714
(43) Veröffentlichungstag der Anmeldung: 18.06.2003
(73) Patentinhaber: DEERE & COMPANY, Moline, Illinois 61265-8098 (US)
(72) Erfinder: Weichholdt, Dirk, 57200, Sarreguemines (FR)
(74) Vertreter: Holst, Sönke

(56) Entgegenhaltungen:
- WO-A-91/10351
- DE-A- 3 631 485
- DE-C- 946 751
- US-A- 2 986 186
- US-A- 6 070 816

## Beschreibung

Die Erfindung betrifft einen Häckselrotor für einen Strohhäcksler mit einem Rotor und wenigstens einem Schlägel, der mittels einer Befestigungsanordnung am Rotor befestigt ist, wobei die Befestigungsanordnung einen Bolzen umfasst, der in ein Loch in dem Schlägel und ein Loch in einer mit dem Rotor verbundenen Konsole eingeführt ist und mit einem den Bolzen in den Löchern halternden, vom Bolzen trennbaren Halterungselement verbunden ist, wobei der Bolzen und/oder das Halterungselement um ihre Längsachse drehfest mit der Konsole verbunden ist bzw. sind.

Bei heute verwendeten Anbaustrohhäckslern (s. DE 36 31 485 C) werden die Häckslerschlägel mit Schrauben und Stoppmuttern drehbar an Konsolen festgelegt, die ihrerseits auf dem Häckslerrotor festgeschweißt sind. Die Schrauben erstrecken sich durch Hülsen, an denen die Häckslerschlägel pendelnd gehaltert sind und durch Löcher in den Konsolen. Die Schrauben und Stoppmuttern sind gegenüber den Konsolen drehbar. Um eine bestimmte Häckselqualität zu erreichen und den Leistungsbedarf des Häckslers in Grenzen zu halten, werden die Schlägel, die beidseitig angeschliffen sind, nach ca. 100 bis 200 Betriebsstunden ausgebaut und gedreht angebaut. Nach dieser Zeit ist die Klinge in der Regel stumpf, so dass die Schnittlänge größer wird und der Leistungsbedarf erheblich ansteigt. Nach weiteren 100 bis 200 Betriebsstunden werden die alten Schlägel gegen neue Schlägel ausgetauscht. Beim Anbringen und Abnehmen der Schrauben muss der Bediener mit einem in einer Hand gehaltenen Schlüssel die Schraube drehen und mit der anderen Hand einen Schlüssel halten, mit dem er die Mutter festhält.

Ein Nachteil der Befestigung mit Schraube und Stoppmutter liegt in dem hohen Zeitbedarf, der für den Wechsel bzw. für das Umdrehen der Schlägel benötigt wird. Als Richtwert gelten hierfür ca. 4 Stunden für einen kompletten Austausch bei einem Mähdrescher mit sechs Schüttlern.

Die US 2 986 186 A beschreibt einen Strohhäcksler mit pendelnd an Konsolen angelenkten Armen. Die Konsolen sind mit einem drehbaren Rotor verbunden und die Arme tragen äußere Häckselmesser, die durch Schrauben mit polygonalen Schäften, die sich durch ähnlich geformte Öffnungen in den Armen und Messern erstrecken, starr mit den Armen verbunden sind. Hier ist zwar ein Wechsel der Häckselmesser mit nur einem Werkzeug möglich, mit dem man die auf der Schraube mit polygonalem Schaft aufgeschraubte Mutter dreht, jedoch nur bei einer starren Befestigung der Häckselmesser.

Die DE 946 751 A beschreibt einen Strohhäcksler mit Messern, die durch endseitig mit Gewinden versehenen Stangen mit Nabenscheiben verbunden sind. Die Stangen können ein z. B. viereckiges Profil mit entsprechender Form der Löcher in den Messern und in den Nabenscheiben haben. Die Messer sind durch je zwei Stangen an den Nabenscheiben fixiert und können demnach nicht pendeln.

In der nachveröffentlichten DE 101 46 773 A werden andere Befestigungsanordnungen zur Befestigung von Schlägeln eines Strohhäckslers vorgeschlagen. In einer ersten Ausführungsform wird ein Bolzen durch Löcher in den Schlägeln und in der Konsole gesteckt und durch einen radial in eine Öffnung des Bolzens steckbaren Stift fixiert. Eine Feder zieht den Stift gegen ein Halterungselement. In einer zweiten Ausführungsform ist der Stift am Bolzen fixiert. Der Bolzen wird axial in das Halterungselement eingeführt und um 90° in seine Verriegelungsstellung gedreht, in der eine Feder den Stift in eine Ausnehmung im Halterungselement zieht. Diese Befestigungsanordnungen ersparen dem Servicepersonal das Lösen und Anziehen der Schrauben. Der Bolzen und das Halterungselement sind drehbar an der Konsole gelagert. Beim Einführen des steckbaren Stifts bzw. des Bolzens ist es somit nötig, den Bolzen oder das Halterungselement zu drehen, um sie in eine Position zu verbringen, in der die Elemente in die zugehörigen Öffnungen einführt werden können. Außerdem ist ein Werkzeug zum Zusammendrücken der Feder erforderlich, um den Bolzen zwischen Löse- und Verriegelungsposition verdrehen zu können.

Die der Erfindung zugrunde liegende Aufgabe wird darin gesehen, eine verbesserte Befestigungsanordnung für Schlägel an einem Häckslerrotor bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der Bolzen und/oder das Halterungselement wird oder werden direkt oder indirekt bezüglich der Achsrichtung des Lochs in der Konsole drehfest mit der Konsole verbunden. Der Bolzen bzw. das Halterungselement können sich somit nicht um ihre Längsachse gegenüber der Konsole drehen. In der Verriegelungsstellung sind in der Regel sowohl der Bolzen als auch das Halterungselement - über jeweils das drehfest mit der Konsole verbundene Element - drehfest mit der Konsole verbunden. Der bzw. die in an sich bekannter Weise pendelnd aufgehängten Schlägel werden auf dem Außenumfang des Halterungselements und/oder auf Hülsen gelagert, die das Halterungselement und/oder den Bolzen umschließen. Die Verwendung der Hülsen ermöglicht, die Lagerflächen, auf denen sich die Schlägel drehen und die sich beim Häckselbetrieb nach und nach abnutzen, im Verschleißfall ohne höhere Kosten auszutauschen.

Auf diese Weise erreicht man eine definierte azimutale Ausrichtung des Halterungselements und/oder des Bolzens relativ zur Konsole. Werden das Halterungselement und der Bolzen durch eine Relativdrehung zwischen Löse- und Verriegelungsstellung bewegt, ist es nicht mehr erforderlich, das Halterungselement oder den Bolzen festzuhalten, während der Bolzen oder das Halterungselement gedreht wird.

Bei einer Ausführungsform mit einem in den Bolzen einsteckbaren, zur Verbindung von Bolzen und Halterungselement dienenden Stift, der durch Federkraft in die Verriegelungsstellung gedrückt wird, erreicht man eine definierte azimutale Ausrichtung des Bolzens und/oder des Halterungselements, so dass sich beim Einstecken des Stifts eine Drehung dieser Elemente erübrigt, um sie in eine Ausrichtung zu bringen, in der der Stift einsteckbar ist. Das ist besonders dann sinnvoll, wenn der Stift nur bei einer bestimmten Ausrichtung von Bolzen und Halterungselement einsteckbar ist. Das Umdrehen oder Wechseln der Schlägel kann wesentlich einfacher und schneller durchgeführt werden.

Es ist grundsätzlich beliebig, ob der Bolzen oder das Halterungselement drehfest mit der Konsole verbunden ist. Beispielsweise kann der Bolzen eine Schraube mit Vierkantschaft sein, der sich durch ein quadratisches Loch der Konsole erstreckt. An dem von seinem Kopf beabstandeten Ende des Bolzens wird dann eine Mutter als Halterungselement auf ein Gewinde aufgeschraubt. In einer anderen Ausführungsform ist das Halterungselement drehfest mit der Konsole verbunden. Dazu sind ein in das Loch der Konsole einführbarer Teil des Halterungselements und das Loch in der Konsole mit zusammenpassenden, unrunden Querschnitten ausgestattet. Die Querschnitte können beispielsweise elliptisch oder rechteckig, insbesondere quadratisch sein. Der Bolzen wird in dieser Ausführungsform lösbar mit dem Halterungselement verbunden, beispielsweise durch ein Schraubengewinde.

Bei der letztgenannten Ausführungsform kann sich der Bolzen durch eine axiale Öffnung des Halterungselements erstrecken und insbesondere an dessen Außenseite mit dem Halterungselement verbunden werden.

Die Hülsen sind zweckmäßigerweise drehfest mit der Konsole verbunden, um zu verhindern, dass sie sich gegenüber der Konsole drehen und eine Trennung des Halterungselements und des Bolzens bewirken.

Der durch die Konsole des Rotors und das Loch des Schlägels steckbare Bolzen ist vorzugsweise durch eine Drehung relativ zum Halterungselement zwischen einer Lösestellung und einer Verriegelungsstellung bewegbar, wobei es beliebig ist, ob der Bolzen oder das Halterungselement gedreht wird. In der Lösestellung kann das Halterungselement vom Bolzen getrennt und auf ihn aufgesetzt werden. In der Verriegelungsstellung ist das Halterungselement nicht vom Bolzen lösbar. Eine Befestigung des Halterungselements am Bolzen durch ein Schraubengewinde wäre zwar denkbar, hat aber den Nachteil, dass das An- und Abschrauben relativ zeitaufwändig ist. Es wird daher vorgeschlagen, dass der Bolzen und das Halterungselement durch eine Drehung von weniger als 360° zwischen der Löse- und Verriegelungsstellung bewegbar sind. Dazu kann eine Art Bajonettbefestigung zwischen dem Halterungselement und dem Bolzen vorgesehen sein.

Vorzugsweise werden das Halterungselement und der Bolzen durch eine Feder in der Verriegelungsstellung gehalten. Beim Umdrehen oder Wechsel der Schlägel ist zunächst die Kraft der Feder zu überwinden, um Halterungselement und Bolzen in die Lösestellung zu bringen. Bei geeigneter Dimensionierung der Feder ist ein unbeabsichtigtes Lösen der Befestigungsanordnung nicht zu befürchten.

Die Arretierung des Bolzens am Halterungselement kann auf verschiedene Arten erfolgen. Es wäre beispielsweise möglich, ein sich radial zum Bolzen erstreckendes Verriegelungselement zu verwenden, wobei der Bolzen durch Drehen um seine Achse zwischen Löse- und Verriegelungsstellung bewegt wird. Das Verriegelungselement wird durch eine Feder in der Verriegelungsstellung gehalten, indem es gegen das Halterungselement gezogen wird, insbesondere in eine dort angeordnete Vertiefung. In der Lösestellung kann der Bolzen durch eine dort vorgesehene Öffnung axial aus dem Halterungselement herausgezogen werden. Die beschriebene Ausführungsform ist in der DE 101 46 773 A detaillierter offenbart, deren Lehre durch Verweis mit in die vorliegende Offenbarung aufgenommen wird. Sie ermöglicht ein einfaches und schnelles Verriegeln der Befestigungsanordnung, es ist aber erforderlich, die Feder vorzuspannen, wozu entsprechende Werkzeuge erforderlich sind. In einer bevorzugten Weiterbildung der Erfindung wird daher vorgeschlagen, das Halterungselement mit einer wendelförmigen Fläche zu versehen, an der das mit dem Bolzen verbundene Verriegelungselement anliegt. Die wendelförmige Fläche bewirkt in der Art einer Schraube, dass die Feder beim Drehen des Bolzens gespannt bzw. gelöst wird. Ein separates Werkzeug zum Spannen der Feder erübrigt sich, so dass nur noch ein einziges Werkzeug zum Drehen des Bolzens erforderlich ist.

In der Verriegelungsstellung liegt das Verriegelungselement vorzugsweise in einer Einbuchtung am Ende der wendelförmigen Fläche. Die Feder zieht, drückt oder dreht das Verriegelungselement in die Einbuchtung. Es ist dort um seine Achse drehfest arretiert. Die Einbuchtung ist vorzugsweise nur so tief und/oder derart abgeschrägt, dass sich der Bolzen ohne Verwendung eines Werkzeugs zum Entspannen der Feder in die Lösestellung drehen lässt.

Das Einsetzen des Bolzens in das Halterungselement erfolgt zweckmäßigerweise in axialer Richtung. Dazu ist das Halterungselement mit einer axialen Öffnung versehen, die an den Querschnitt des Bolzens, an dem das Verriegelungselement befestigt ist, angepasst ist.

In den Zeichnungen sind zwei nachfolgend näher beschriebene Ausführungsbeispiele der Erfindung dargestellt. Es zeigt:
- Fig. 1: eine Erntemaschine mit einem Strohhäcksler;
- Fig. 2: eine perspektivische Explosionszeichnung einer ersten Ausführungsform einer Befestigungsanordnung für die Schlägel des Strohhäckslers,
- Fig. 3: eine vergrößerte perspektivische Ansicht des Halterungselements aus Figur 2,
- Fig. 4: eine perspektivische Explosionszeichnung einer zweiten Ausführungsform einer Befestigungsanordnung für die Schlägel des Strohhäckslers,
- Fig. 5: eine vergrößerte perspektivische Ansicht des Halterungselements aus Figur 4 von außen, und
- Fig. 6: eine vergrößerte perspektivische Ansicht des Halterungselements aus Figur 4 von innen.

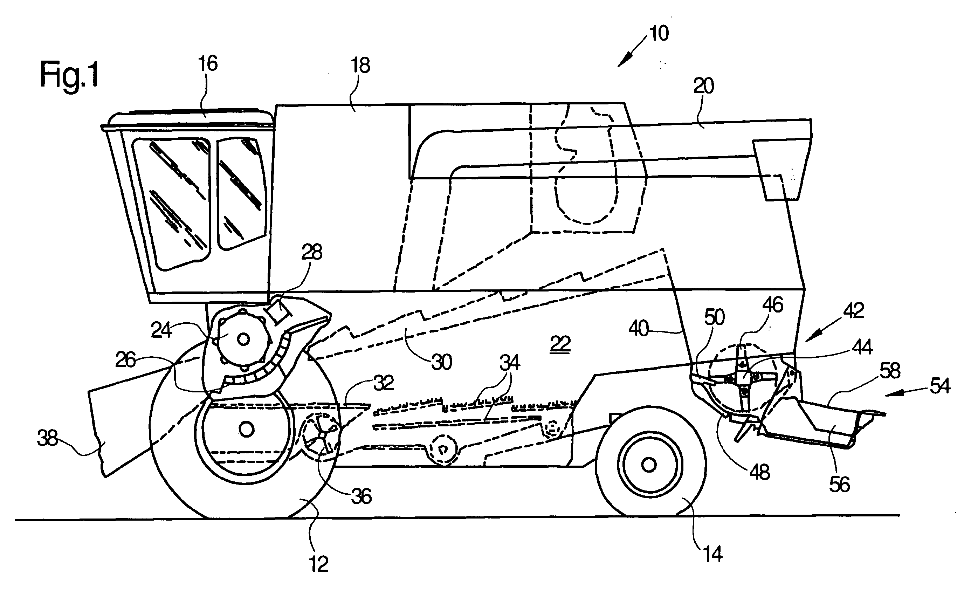

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 über ein Strohleitblech 40 einem Strohhäcksler 42 zugeführt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde der Dreschtrommel 24 zugeführt, nachdem es von einer nicht gezeigten Erntegutbergungsvorrichtung vom Boden aufgenommen worden ist.

Der Strohhäcksler 42 umfasst einen hohlzylindrischen Rotor 44 mit um seinen Umfang und über seine Länge verteilten, pendelnd aufgehängten Schlägeln 46, der mit einem Antrieb derart verbunden ist, dass er in einem Gehäuse 48 um eine etwa horizontale, quer zur Fahrtrichtung verlaufende Achse rotiert. Im Zusammenwirken mit Gegenmessern 50 werden die ausgedroschenen, großen Erntegutteile zu Häckselgut zerkleinert. An der Rückseite des Strohhäckslers 42 ist eine Verteileinrichtung 54 angeordnet, die eine Anzahl seitlich nebeneinander angeordneter Leiteinrichtungen 56 in Form von Strohleitblechen umfasst, welche unterhalb einer Strohverteilerhaube 58 angeordnet sind.

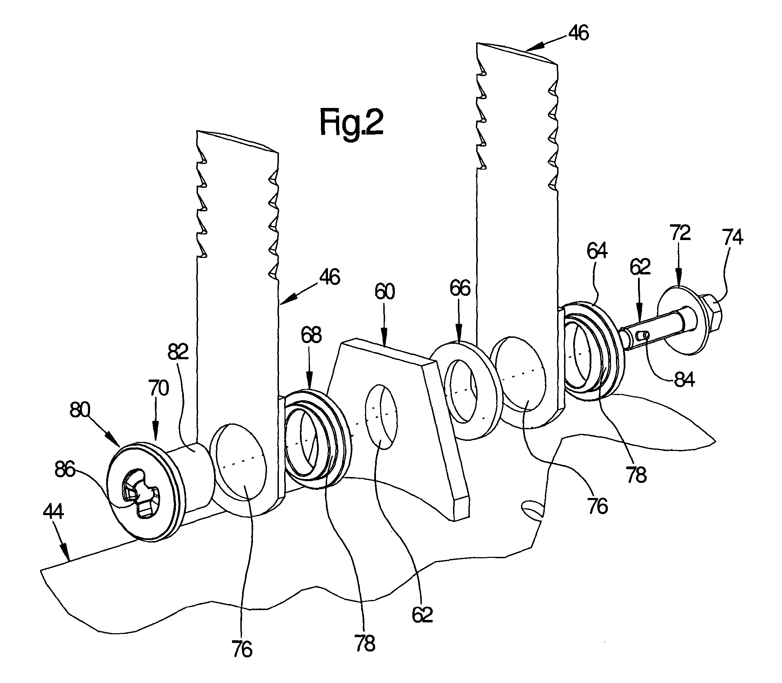

Die vorliegende Erfindung bezieht sich auf die Befestigungsanordnung für die Schlägel 46 am Rotor 44. In der Figur 2 ist eine erste Ausführungsform einer derartigen Befestigungsanordnung in Explosionsdarstellung wiedergegeben. Die an ihren Längsseiten und vorzugsweise an den äußeren Enden mit Schneidkanten ausgestatteten Schlägel 46 sind paarweise an einer am Rotor 44 angeschweißten oder auf andere Weise befestigten Konsole 60 befestigt, wobei sich je ein Schlägel 46 auf jeder Seite der Konsole 60 befindet. Es könnten auch mehr als zwei Schlägel 46 an der Konsole 60 befestigt werden. Die Konsole 60 erstreckt sich in der Drehrichtung des Rotors 44. Die Konsole 60 ist mit einem sich in Achsrichtung des Rotors 44 erstreckenden Loch 62 versehen.

Zur Befestigung der Schlägel 46 an der Konsole 60 dienen ein Bolzen 62, zwei Hülsen 64, 68, ein Abstandshalter 66 sowie ein Halterungselement 70. Eine tellerförmige Feder 72 ist auf den Bolzen 62 aufsteckbar und liegt an seinem Kopf 74 an. Der Schaft des Bolzens 62 erstreckt sich im montierten Zustand durch ein mittiges Loch der Feder 72, eine zentrische Öffnung in der ersten Buchse 64, ein Loch 76 im ersten Schlägel 46, eine Öffnung im ersten Abstandshalter 66, der wie eine Unterlegscheibe geformt ist, das Loch 62 in der Konsole 60, eine zentrische Öffnung in der zweiten Hülse 68, ein Loch im zweiten Schlägel 46 und durch das Halterungselement 70.

Die Löcher der Schlägel 48 finden jeweils Aufnahme auf kreiszylindrischen Abschnitten 78 der Hülsen 64, 68. Auf den Abschnitten 78 sind die Schlägel 48 pendelnd, d.h. um die Längsachse des Bolzens 62 drehbar gelagert.

Das Halterungselement 70 weist an seinem vom Kopf 74 des Bolzens 62 beabstandeten Ende einen radial von einem axialen Schaft 82 des Halterungselements 70 überstehenden, ringförmigen Kopf 80 auf. Die Länge des Schafts 82 des Halterungselements 70 ist derart bemessen, dass sich der Schaft 82 im zusammengebauten Zustand der Befestigungsanordnung durch die zweite Hülse 68, das Loch 62 der Konsole 60, durch den Abstandshalter 66 und die erste Hülse 64 erstreckt. Dabei sind die Löcher 76 der Schlägel 46 auf den kreiszylindrischen Abschnitten 78 der Hülsen 64, 68 angeordnet. Die Querschnitte des Schafts 82, der Hülsen 64, 68, des Lochs 62 und des Abstandshalters 66 sind nicht kreisförmig, nämlich elliptisch gewählt und stimmen zumindest näherungsweise überein. Dadurch erreicht man, dass das Halterungselement 70 drehfest mit der Konsole 62 gekoppelt ist, sobald der Schaft 82 in das Loch 62 eingesteckt ist. Es kann sich nicht um seine Längsachse drehen. Auch die Hülsen 64, 68 und der Abstandshalter 66 sind über das Halterungselement 70 um ihre Achse drehfest an der Konsole 60 festgelegt, sobald sie auf den Schaft 82 des Halterungselements 70 gesteckt sind und letzteres sich auf der Konsole 60 befindet.

Die lösbare Befestigung des Bolzens 62 am Halterungselement 70 erfolgt durch ein fest mit dem Bolzen 62 verbundenes stiftförmiges Verriegelungselement 84, das sich in der Nähe des vom Kopf 74 beabstandeten Endes des Bolzens 62 radial zum Bolzen 62 erstreckt. Durch eine dem Querschnitt des Bolzens 62 und des Verriegelungselements 84 angepasste axiale Öffnung 86 des Halterungselements 70 ist der Bolzen 62 in das Halterungselement 80 einsteckbar. Die Öffnung 86 hat die Form eines Schlüssellochs für einen Schlüssel mit diametral gegenüberliegenden Bärten.

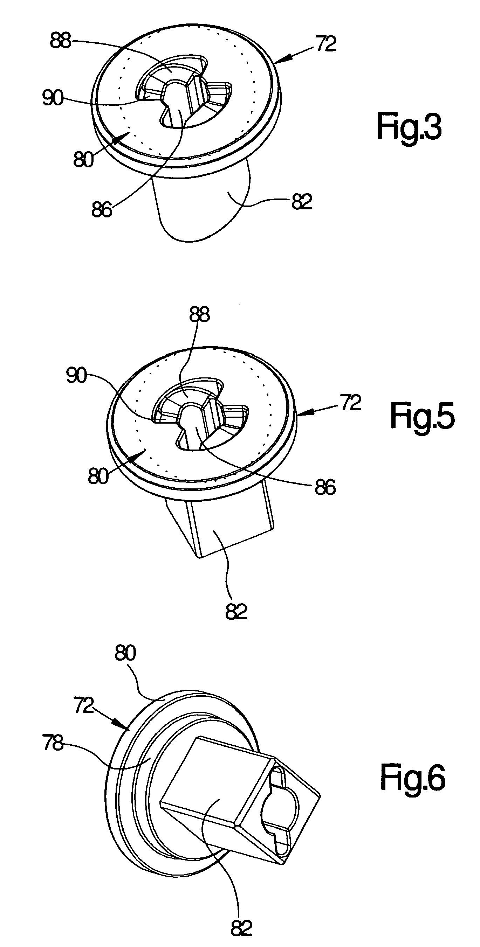

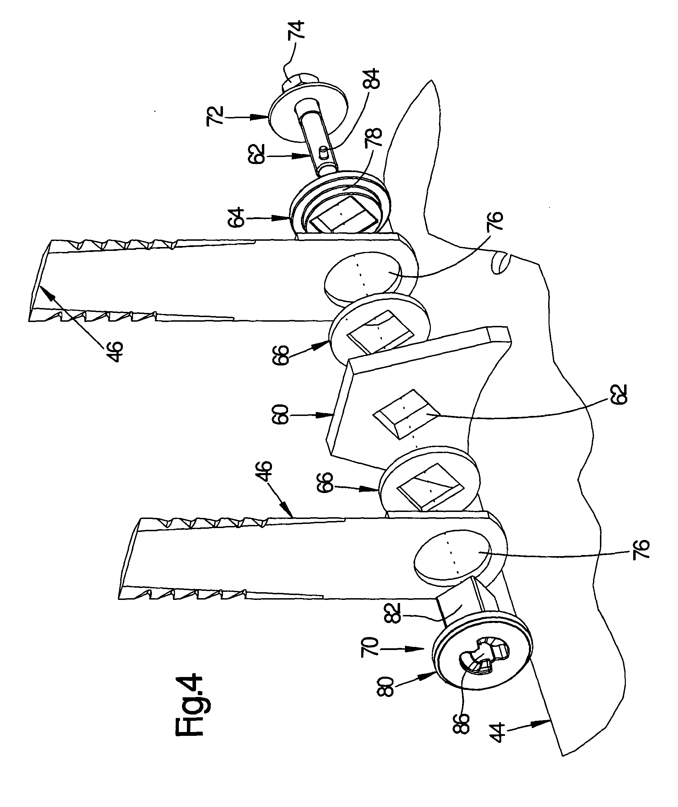

Anhand der Figur 3 ist erkennbar, dass an der Stirnfläche des Kopfes 80 des Halterungselements 70, die Öffnung 86 teilweise umrundend, eine wendelförmige Fläche 88 vorgesehen ist. Die wendelförmige Fläche 88 nähert sich (in azimutaler Richtung) mit wachsendem Abstand von dem Ausschnitt der Öffnung 86, durch den das Verriegelungselement 84 eingesteckt wird, sukzessive der Stirnfläche des Kopfes 80. Die Fläche 88 umfasst einen azimutalen Winkelbereich von etwa 120°. An ihrem dem genannten Ausschnitt der Öffnung 86 beabstandeten Ende ist in der wendelförmigen Fläche 88 eine Einbuchtung 90 in Form einer axialen Vertiefung vorgesehen. An der wendelförmigen Fläche 88 kommt das Verriegelungselement 84 in Anlage, wenn der Bolzen 62 in das Halterungselement 70 eingesteckt wird.

Zur Verriegelung wird der Bolzen 62 in die Öffnung 86 des Halterungselements 70 eingesteckt und mittels eines auf seinen Kopf 74 aufgesteckten, geeigneten Werkzeugs (Schlüssel) gedreht, so dass sich das Verriegelungselement 84 in Figur 2 im Gegenuhrzeiger dreht, wenn man sich die Befestigungsanordnung von links her betrachtet. Wegen der wendelförmigen Form der Fläche 88 wird der Bolzen 62 beim Drehen gegen die Kraft der Feder 72 immer weiter in das Halterungselement 70 hineingezogen. Gelangt das Verriegelungselement 84 nach Überstreichen des Winkelbereichs der Fläche 88 in die Einbuchtung 90, entspannt sich die Feder 72 wieder geringfügig; das Verriegelungselement 84 ist dort in seiner Verriegelungsstellung arretiert. Die Feder 72 ist dann zwischen der ersten Hülse 64 und dem Kopf 74 des Bolzens 62 verspannt.

Durch die drehfeste Fixierung des Halterungselements 70 in der Konsole 60 erübrigt es sich, das Halterungselement 70 mit einem zweiten Werkzeug festzuhalten.

Das Zerlegen der Befestigungsanordnung zum Umdrehen oder Austauschen der Schlägel 46 erfolgt durch eine Drehung des Kopfs 74 des Bolzens 62 in die Gegenrichtung (in Figur 2 im Uhrzeigersinn), wobei es durch die relativ geringe Tiefe der Einbuchtung 90 und/oder eine entsprechende Abschrägung des der Einbuchtung 90 benachbarten Bereichs der wendelförmigen Fläche 88 möglich ist, das Verriegelungselement 84 ohne allzu große Drehmomente gegen die Kraft der Feder 72 aus der Verriegelungsstellung heraus zu verbringen. Ein Werkzeug zum Zusammendrücken der Feder 72 oder zum Halten des Halterungselements 70 erübrigt sich. Es wird wegen des einfachen Abnehmens und Anbringens der Schlägel möglich, sie im Falle einer Beschädigung beim Ernten auf dem Feld zu wechseln. Der Bolzen 62 kann aus dem Halterungselement 70 entnommen werden, sobald das Verriegelungselement 84 über dem ihm zugeordneten Bereich der Öffnung 86 liegt.

Im montierten Zustand der Befestigungsanordnung bewirkt die Einbuchtung 90 eine Arretierung des Verriegelungselements 82 in der Verriegelungsstellung. Der Strohhäcksler 42 kann wie üblich betrieben werden. Die Schlägel 46 pendeln auf den Hülsen 64, 68. Da die Hülsen 64, 68 drehfest auf dem Halterungselement 70 gelagert sind, drehen sie sich nicht mit den Schlägeln 46 mit. Dadurch können sie nicht das Verriegelungselement 84 aus der Einbuchtung 90 herausdrehen oder -ruckeln.

In der Figur 3 ist eine zweite Ausführungsform einer erfindungsgemäßen Befestigungsanordnung dargestellt. Mit der ersten Ausführungsform übereinstimmende Elemente sind mit gleichen Bezugszeichen gekennzeichnet.

Die zweite Ausführungsform stimmt im Wesentlichen mit der ersten Ausführungsform überein. Es gibt allerdings zwei erwähnenswerte Unterschiede:
Es ist nur eine Hülse 64 vorgesehen. Auf der dem Kopf 86 zugewandten Seite der Konsole 60 ist (anstelle der Hülse 68 der ersten Ausführungsform) ein zweiter Abstandshalter 66 vorgesehen. Das Loch 76 des in Figur 4 links eingezeichneten Schlägels 46 ist auf einem kreiszylindrischen Abschnitt 78 aufgenommen, der dem Kopf 80 des Halterungselements 70 benachbart ist, wie am Besten in Figur 6 erkennbar ist. Eine derartige Konfiguration kann auch bei der Ausführungsform mit elliptischen Querschnitten verwendet werden. Es wäre auch denkbar, auf der dem Kopf 74 des Bolzens 62 zugewandten Seite der Konsole 60 nur zwei Abstandshalter 66, aber keine Hülse 64 vorzusehen.

Die Querschnitte der zur drehfesten Anbringung des Halterungselements 70 an der Konsole 60 dienenden Elemente, d.h. des Lochs 62 der Konsole 60 und des Schafts 82 des Halterungselements 70 sind nicht elliptisch, sondern quadratisch. Auch die Hülse 64 und die Abstandshalter 66 sind mit quadratischen Löchern versehen.

Die Konsolen 60, Hülsen 64 und Abstandshalter 66 beider Ausführungsformen können preiswert durch Stanzen hergestellt werden. Anstelle der elliptischen bzw. quadratischen Querschnitte des Schafts 82 des Halterungselements 70 und des Lochs 62 der Konsole 60, sowie der Hülsen 64 und Abstandshalter 66 können beliebige, unrunde Querschnitte treten. So wäre eine sich axial erstreckende Ein- oder Ausbuchtung im Schaft 82 des Halterungselements 70 denkbar, die mit überstehenden oder eingebuchteten Bereichen der anderen genannten Elemente zusammenwirkt. Auch ein Einschieben einer Passfeder oder eines anderen, separaten Elements in eine Ausnehmung des Halterungselements 70 wäre zur Herstellung einer drehfesten Anordnung des Halterungselements 70 in der Konsole 60 denkbar.

## Patentansprüche

1. Häckselrotor für einen Strohhäcksler (42), mit einem Rotor (44) und wenigstens einem Schlägel (46), der mittels einer Befestigungsanordnung am Rotor (44) befestigt ist, wobei die Befestigungsanordnung einen Bolzen (62) umfasst, der in ein Loch (76) in dem Schlägel (46) und ein Loch (62) in einer mit dem Rotor (44) verbundenen Konsole (60) eingeführt ist und mit einem den Bolzen (62) in den Löchern (62, 76) halternden, vom Bolzen (62) trennbaren Halterungselement (70) verbunden ist, wobei der Bolzen (62) und/oder das Halterungselement (70) um ihre Längsachse drehfest mit der Konsole (60) verbunden ist bzw. sind, **dadurch gekennzeichnet, dass** der Schlägel (46) auf dem Außenumfang des Halterungselements (70) und/oder einer das Halterungselement (70) und/oder den Bolzen (62) umschließenden Hülse (64, 68) pendelnd gelagert ist.

2. Häckselrotor nach Anspruch 1, **dadurch gekennzeichnet, dass** das Halterungselement (70) in das Loch (62) in der Konsole (60) einführbar ist und dass zumindest der in das Loch (62) in der Konsole (60) einführbare Teil des Halterungselements (70) und das Loch (62) einen zusammenpassenden, unrunden, beispielsweise elliptischen oder rechteckigen Querschnitt aufweisen.

3. Häckselrotor nach Anspruch 2, **dadurch gekennzeichnet, dass** sich der Bolzen (62) durch eine axiale Öffnung (86) des Halterungselements (70) erstreckt.

4. Häckselrotor nach einem der Ansprüche 1 bis 4, **dadurch gekennzeichnet, dass** die Hülse (64, 68) drehfest mit der Konsole (60) verbindbar ist.

5. Häckselrotor nach einem der Ansprüche 1 bis 4, **dadurch gekennzeichnet, dass** der Bolzen (62) und das Halterungselement (70) durch eine Drehung von vorzugsweise weniger als 360° zwischen Löse- und der Verriegelungsstellung beweglich sind.

6. Häckselrotor nach einem der Ansprüche 1 bis 5, **dadurch gekennzeichnet, dass** der Bolzen (62) und das Halterungselement (70) durch eine Feder (72) in der Verriegelungsstellung gehalten werden.

7. Häckselrotor nach Anspruch 6, **dadurch gekennzeichnet, dass** ein mit dem Bolzen (62) verbundenes Verriegelungselement (84) sich radial zum Bolzen (62) erstreckt und an einer wendelförmigen Fläche (88) des Halterungselements (70) in Anlage bringbar ist, die derart geformt ist, dass die Feder (72) beim Drehen des Verriegelungselements (84) gegenüber dem Halterungselement (70) in die Verriegelungsstellung gespannt und beim Drehen in die Lösestellung entspannt wird.

8. Häckselrotor nach Anspruch 7, **dadurch gekennzeichnet, dass** das Verriegelungselement (84) in der Verriegelungsstellung in einer Einbuchtung (90) der wendelförmigen Fläche (88) liegt.

9. Häckselrotor nach einem der Ansprüche 7 oder 8, **dadurch gekennzeichnet, dass** das Verriegelungselement (84) fest mit dem Bolzen (84) verbunden ist und dass das Halterungselement (70) mit einer axialen Öffnung (86) versehen ist, durch die der Bolzen (62) mit dem Verriegelungselement (84) durchführbar sind.

10. Mähdrescher (10) mit einem Häckselrotor nach einem der Ansprüche 1 bis 9.

## Claims

1. Chopping rotor for a straw chopper (42), having a rotor (44) and at least one flail (46), which is fastened to the rotor (44) by means of a fastening arrangement, the fastening arrangement comprising a bolt (62), which is inserted in a hole (76) in the flail (46) and a hole (62) in a bracket (60) connected to the rotor (44) and is connected to a mounting element (70) supporting the bolt (62) in the holes (62, 76) and separable from the bolt (62), the bolt (62) and/or the mounting element (70) being connected to the bracket (60) so as to be rotationally secure about its longitudinal axis, **characterized in that** the flail (46) is mounted in swinging arrangement on the outer periphery of the mounting element (70) and/or a sleeve (64, 68) enclosing the mounting element (70) and/or the bolt (62).

2. Chopping rotor according to Claim 1, **characterized in that** the mounting element (70) can be inserted into the hole (62) in the bracket (60), and **in that** at least that part of the mounting element (70) which is insertable into the hole (62) in the bracket (60), and the hole (62), have a matching non-circular, for example elliptical or rectangular, cross section.

3. Chopping rotor according to Claim 2, **characterized in that** the bolt (62) extends through an axial opening (86) in the mounting element (70).

4. Chopping rotor according to one of Claims 1 to 3, **characterized in that** the sleeve (64, 68) can be connected in a rotationally secure manner to the bracket (60).

5. Chopping rotor according to one of Claims 1 to 4, **characterized in that** the bolt (62) and the mounting element (70) are movable by a rotation of preferably less than 360° between the release and the locking setting.

6. Chopping rotor according to one of Claims 1 to 5, **characterized in that** the bolt (62) and the mounting element (70) are held in the locking setting by a spring (72).

7. Chopping rotor according to Claim 6, **characterized in that** a locking element (84) connected to the bolt (62) extends radially to the bolt (62) and can be brought into bearing contact against a helical face (88) of the mounting element (70), which is shaped such that the spring (72), upon rotation of the locking element (84) relative to the mounting element (70) into the locking setting, is tensioned and, upon rotation into the release setting, is detensioned.

8. Chopping rotor according to Claim 7, **characterized in that** the locking element (84), in the locking setting, lies in a recess (90) in the helical face (88).

9. Chopping rotor according to one of Claims 7 or 8, **characterized in that** the locking element (84) is fixedly connected to the bolt (84), and **in that** the mounting element (70) is provided with an axial opening (86) through which the bolt (62) with the locking element (84) can be led.

10. Combine harvester (10) having a chopping rotor according to one of Claims 1 to 9.

## Revendications

1. Rotor de hachage pour un hache-paille (42), comportant un rotor (44) et au moins un fléau (46) qui est fixé contre le rotor (44) au moyen d'un système de fixation, le système de fixation comportant un boulon (62), qui est inséré dans un trou (76) dans le fléau (46) et dans un trou (62) dans une console (60) assemblée au rotor (44), et comportant un élément de fixation (70) qui maintient le boulon (62) dans les trous (62, 76) et qui peut être détaché du boulon (62), le boulon (62) et/ou l'élément de fixation (70) étant assemblé(s) à la console (60) de manière solidaire en rotation autour de leur axe longitudinal, **caractérisé en ce que** le fléau (46) est monté de manière oscillante sur le pourtour extérieur de l'élément de fixation (70) et/ou d'une douille (64, 68) entourant l'élément de fixation (70) et/ou le boulon (62).

2. Rotor de hachage selon la revendication 1, **caractérisé en ce que** l'élément de fixation (70) peut être introduit dans le trou (62) dans la console (60) et **en ce qu'**au moins la partie de l'élément de fixation (70), laquelle peut être introduite dans le trou (62) de la console (60), et le trou (62) ont une section adaptée, non ronde, par exemple elliptique ou rectangulaire.

3. Rotor de hachage selon la revendication 2, **caractérisé en ce que** le boulon (62) passe à travers une ouverture axiale (86) de l'élément de fixation (70).

4. Rotor de hachage selon l'une quelconque des revendications 1 à 4, **caractérisé en ce que** la douille (64, 68) peut être assemblée de manière solidaire en rotation avec la console (60).

5. Rotor de hachage selon l'une quelconque des revendications 1 à 4, **caractérisé en ce que** le boulon (62) et l'élément de fixation (70) sont mobiles entre une position désolidarisée et la position verrouillée par une rotation couvrant de préférence moins de 360°.

6. Rotor de hachage selon l'une quelconque des revendications 1 à 5, **caractérisé en ce que** le boulon (62) et l'élément de fixation (70) sont maintenus dans la position verrouillée par un ressort (72).

7. Rotor de hachage selon la revendication 6, **caractérisé en ce qu'**un élément de verrouillage (84), assemblé au boulon (62), est orienté dans le sens radial par rapport au boulon (62) et peut être amené en appui contre une surface hélicoïdale (88) de l'élément de fixation (70), laquelle est formée de telle sorte que le ressort (72) est tendu lors de la rotation de l'élément de verrouillage (84) par rapport à l'élément de fixation (70) vers la position verrouillée, et est détendu lors de la rotation vers la position désolidarisée.

8. Rotor de hachage selon la revendication 7, **caractérisé en ce que** l'élément de verrouillage (84), dans la position verrouillée, est disposé dans un creux (90) de la surface hélicoïdale (88).

9. Rotor de hachage selon la revendication 7 ou 8, **caractérisé en ce que** l'élément de verrouillage (84) est assemblé de manière fixe au boulon (62) et **en ce que** l'élément de fixation (70) comporte une ouverture (86) axiale, à travers laquelle peut passer le boulon (62) avec l'élément de verrouillage (84).

10. Moissonneuse-batteuse (10) comportant un rotor de hachage selon l'une quelconque des revendications 1 à 9.
